(19) Europäisches Patentamt
European Patent Office
Office européen des brevets

(11) **EP 3 642 647 B1**

(12) **FASCICULE DE BREVET EUROPEEN**

(45) Date de publication et mention de la délivrance du brevet:
**04.05.2022 Bulletin 2022/18**

(21) Numéro de dépôt: **18731117.0**

(22) Date de dépôt: **20.06.2018**

(51) Classification Internationale des Brevets (IPC):
**G01S 17/95** [(2006.01)]    **G01S 17/58** [(2006.01)]

(52) Classification Coopérative des Brevets (CPC):
**G01S 17/95; G01S 17/58;** Y02A 90/10; Y02E 10/72

(86) Numéro de dépôt international:
**PCT/EP2018/066478**

(87) Numéro de publication internationale:
**WO 2018/234409 (27.12.2018 Gazette 2018/52)**

(54) **PROCEDE D'ACQUISITION ET DE MODELISATION PAR UN CAPTEUR LIDAR D'UN CHAMP DE VENT INCIDENT**

VERFAHREN ZUR ERFASSUNG UND MODELLIERUNG EINES EINFALLSWINDFELDS UNTER VERWENDUNG EINES LIDARSENSORS

METHOD FOR ACQUIRING AND MODELLING AN INCIDENT WIND FIELD BY MEANS OF A LIDAR SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2017 FR 1755675**

(43) Date de publication de la demande:
**29.04.2020 Bulletin 2020/18**

(73) Titulaire: **IFP Energies nouvelles**
**92852 Rueil-Malmaison (FR)**

(72) Inventeurs:
• **NGUYEN, Hoai-Nam**
  **69008 Lyon (FR)**
• **GUILLEMIN, Fabrice**
  **78100 Saint Germain en Laye (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
• **F. GUILLEMIN ET AL: "Nacelle LiDAR online wind field reconstruction applied to feedforward pitch control", JOURNAL OF PHYSICS: CONFERENCE SERIES, vol. 753, 1 septembre 2016 (2016-09-01), page 052019, XP055451670, GB ISSN: 1742-6588, DOI: 10.1088/1742-6596/753/5/052019**
• **OUDE NIJHUIS A C P ET AL: "Outlook for a new wind field retrieval technique: The 4D-Var wind retrieval", 2014 INTERNATIONAL RADAR CONFERENCE, IEEE, 13 octobre 2014 (2014-10-13), pages 1-6, XP032746351, DOI: 10.1109/RADAR.2014.7060421**
• **ANTOINE BORRACCINO ET AL: "Wind field reconstruction from nacelle-mounted lidar short-range measurements", WIND ENERGY SCIENCE, vol. 2, no. 1, 24 mai 2017 (2017-05-24), pages 269-283, XP055451422, DOI: 10.5194/wes-2-269-2017**
• **R MAYES ET AL: "Topics in Experimental Dynamics Substructuring and Wind Turbine Dynamics, Volume 2 : Proceedings of the 30th IMAC, A Conference on Structural Dynamics, 2012", PROCEEDINGS OF THE 30TH IMAC,, 1 janvier 2012 (2012-01-01), XP055451327, New York, NY DOI: 10.1007/978-1-4614-2422-2 ISBN: 978-1-4614-2421-5 cité dans la demande**

**(Cont. page suivante)**

• P. TOWERS ET AL: "Real-time wind field reconstruction from LiDAR measurements using a dynamic wind model and state estimation : LiDAR wind field estimation", WIND ENERGY, vol. 19, no. 1, 21 novembre 2014 (2014-11-21), pages 133-150, XP055451329, GB ISSN: 1095-4244, DOI: 10.1002/we.1824 cité dans la demande

**Description**

La présente invention concerne le domaine des capteurs LiDAR (Light Détection And Ranging ou détection et localisation par la lumière) utilisés comme moyen de télédétection pour mesurer la vitesse du vent. Elle concerne également le domaine des éoliennes équipées de capteur LiDAR, ainsi que le contrôle de celles-ci.

Les performances des capteurs LIDAR en terme de précision, fiabilité et disponibilité des mesures, permettent d'élaborer des estimations et des prédictions d'un état de vent pour un volume d'aérosol visé. Cependant les capteurs LiDAR présentent certaines limitations de précision et de disponibilité de la donnée. D'une part ils ne fournissent qu'une mesure brute du vent, c'est à dire une projection du vent sur un axe de mesure (autrement appelé faisceau LASER pour light amplification by stimulated emission of radiation ou amplification de lumière par une émission stimulée de rayonnements) et d'autre part ils ne permettent d'accéder qu'à une bande passante limitée et bruitée du contenu spectral du vent. Comme la mesure brute est une mesure indirecte du vent qui correspond à la projection du vent sur l'axe d'un faisceau LASER, il est alors nécessaire de combiner plusieurs mesures brutes de plusieurs faisceaux (ou axes de mesure) de directions distinctes, pour obtenir une estimation précise du vecteur vent.

De telles estimations ne sont cependant pas accessibles de manière triviale ni directe, et nécessitent la conception et la mise au point d'algorithmes de reconstruction précis et robustes liés à la qualité variable du signal, à la géométrie du capteur, et aux conditions de vent.

La plupart des méthodes de reconstruction élaborées jusqu'à maintenant s'appuient sur l'hypothèse d'un champ de vent homogène et stable sur toute la surface balayée par le rotor comme cela est décrit dans la publication 'A tutorial on the dynamics and control of wind turbines and wind farms', In 2009 American Control Conference. IEEE. 2009, pp. 2076-2089.

Cependant cette hypothèse n'est pas représentative ni réaliste, étant donné que la vitesse de vent varie considérablement en fonction de l'altitude, au sein de la couche limite atmosphérique, avec une dynamique très complexe.

La publication de *"P Towers and B LI Jones, 'Real-time wind field reconstruction from LiDAR measurements using a dynamic wind model and state estimation', In Wind Energy 19.1 (2016), pp. 133- 150",* propose un algorithme d'estimation pour reconstruire un champ de vent. L'approche consiste à utiliser un filtre de Kalman « unscented » (sans parfum) intégrant un modèle d'écoulement basé sur les équations de Navier-Stockes simplifiées. Cependant, cette technique fournit une reconstruction en deux dimensions (2D) du champ de vent, à une altitude fixée. De plus, la technique, telle que décrite dans cette publication, s'appuie sur une hypothèse non réaliste qui est que toutes les mesures du LiDAR sont disponibles pour tous les faisceaux, au même instant.

Enfin, on connait également un algorithme de reconstruction proposé par certains fabricants de capteur LiDAR. Le principe est dans ce cas d'obtenir une estimation instantanée de la vitesse du vent en des points de l'espace nonmesurés, à partir d'interpolations sur les mesures. Cependant, dans de tels cas il n'est possible d'obtenir, en temps réel et en ligne, qu'une estimation de la composante du vent dans l'axe du LiDAR. La vitesse de vent longitudinale et la direction ne sont obtenues que sur la base d'une moyenne glissante, et ne sont pas exploitables pour des applications en temps réel. Le document de F. GUILLEMIN ET AL: "Nacelle LiDAR online wind field reconstruction applied to feedforward pitch control",JOURNAL OF PHYSICS: CONFERENCE SERIES, vol. 753, 1 septembre 2016, page 052019, XP055451670 décrit un algorithme de reconstruction du champ de vent devant une éolienne afin de contrôler par anticipation l'angle des pâles de l'éolienne.

Dans le domaine des éoliennes, la productivité des éoliennes et les coûts de maintenance dépendent fortement de la capacité de monitoring du système, et en particulier de la capacité à exploiter une information de vent pertinente. En effet les principales sources de dommages infligés à la structure et aux organes de l'éolienne sont liées aux conditions de vent impliquant des chargement extrêmes (fort vent turbulent, rafales) et à la fatigue des matériaux soumis à des phénomènes vibratoires et oscillants. Ceux-ci sont générés par les interactions entre l'éolienne et le champ de vent, avec notamment des problèmes de vibrations excitant les modes propres de l'éolienne. Il existe certaines stratégies de contrôle qui sont actuellement implémentées mais elles ne disposent pas d'une information de vent fiable et intégrable dans la boucle de contrôle pour assurer la durée d'exploitation prévue. Dans certains cas la vitesse du rotor est régulée par le couple génératrice et le couple aérodynamique (via l'orientation des pâles). Dans d'autres cas il n'y a pas d'utilisation directe de la mesure de vent dans la boucle de contrôle ce qui fait que la régulation de vitesse du rotor se fait en rétroaction. On peut également avoir un alignement à partir d'un capteur anémométrique situé en zone turbulente (nacelle) et soumis à des dérives ce qui conduit à avoir une éolienne souvent désalignée.

Dans tous les cas, ceci oblige à intégrer des contraintes dans le design de l'éolienne, avec des structures renforcées et un surcout d'investissement associé, et également avec une perte de production et des risques de chargement de la structure associés.

Afin de pallier aux inconvénients mentionnés précédemment, un premier aspect de l'invention consiste donc à développer une méthode améliorée pour estimer la vitesse et la direction d'un champ de vent en trois dimensions (3D) en ligne, en temps réel, dans un volume situé en amont d'un capteur LiDAR de manière à disposer d'une estimation et d'une prévision court terme du champ de vent incident sur le capteur LiDAR. Un second aspect de l'invention vise à utiliser cette méthode et ce capteur LiDAR dans une stratégie de contrôle d'une éolienne de manière à avoir des prévisions de chargement du rotor de l'éolienne, à détecter des rafales, des turbulences, des cisaillements, etc.

A cet effet, l'invention concerne un procédé d'acquisition et de modélisation par un capteur LiDAR d'un champ de vent incident dans un espace situé en amont dudit capteur LiDAR. Pour le procédé on réalise les étapes suivantes :

a) une étape de maillage de l'espace situé en amont dudit capteur LiDAR dans laquelle le maillage de l'espace est réalisé par un ensemble de points discrétisés positionnés selon une grille tridimensionnelle prédéfinie qui comprend un ensemble de mailles composées de points d'estimation et de points de mesure.

L'étape de maillage permet de discrétiser (ou échantillonner) l'espace en amont du capteur LiDAR en une grille tridimensionnelle composée de points discrétisés et de pouvoir faire coïncider ces différents points discrétisés soit en points de mesure soit en points d'estimation nécessaires au procédé de modélisation. Il permet en outre de positionner relativement entre eux les points de mesure et d'estimation et de connaitre les distances séparant l'ensemble de ces points discrétisés.

b) une étape de mesure de l'amplitude et de la direction du vent aux différents points de mesure situés dans l'espace en amont et positionnés à au moins deux distances distinctes du capteur LiDAR, le long d'au moins trois axes de mesure,

Les mesures effectuées dans cette étape permettent d'obtenir des données initiales suffisantes et fiables pour alimenter un algorithme destiné à estimer l'amplitude et la direction du vent sur les points d'estimation.

c) une étape d'estimation de l'amplitude et de la direction du vent à un instant quelconque sur l'ensemble des points d'estimation et l'estimation est effectuée au moyen de l'optimisation par une méthode de moindre carrés récursifs pondérés d'une fonction de coût *J* (t) qui utilise au moins les données des points mesurés, des données de cohérence spatiale de la vitesse du vent, des données de cohérence temporelle de la vitesse du vent, ainsi que des données qualifiant la qualité des mesures effectuées sur les points de mesure et ladite fonction de coût J(t) à un instant (t) quelconque s'écrit sous la forme définie au paragraphe liant les pages 4 et 5 de la demande.

La prise en compte de ces différents paramètres dans une fonction de cout à optimiser est ce qui va permettre d'accéder à une estimation de l'amplitude et de la direction du vent sur chaque point d'estimation du maillage.

d) une étape de reconstruction, en temps réel et dans un repère défini, du champ de vent incident en trois dimensions (3D) à partir des amplitudes et des directions du vent estimées et mesurées pour chaque point.

Cette étape permet de reconstruire en 3D dans le volume échantillonné par la grille tridimensionnelle le champ de vent incident. Dans cette étape on réalise un historique des mesures LiDAR ce qui permet de connaitre les états passés du champ de vent, et celui-ci est incorporé dans la synthèse des estimations courante et future du champ de vent 3D ce qui permet une reconstruction en temps réel.

L'intérêt d'utiliser une approche par optimisation, utilisant une forme récursive des moindres carrés pondérés, est de pouvoir déterminer une image complète en trois dimensions (3D) du vent incident se propageant dans l'espace situé en amont du capteur LiDAR.

Selon un aspect de l'invention, la mesure *m* de l'amplitude et de la direction du vent en un point de mesure est donnée par une relation de la forme :

$$m_{j,x}(k) = a_j v_{j,x}(k) + b_j v_{j,y}(k) + c_j v_{j,z}(k)$$

où $v_{j,x}(k)$, $v_{j,y}(k)$, $v_{j,z}(k)$ sont des valeurs de la vitesse du vent projetées sur un repère x, y, z à un temps initial (k), et $a_j$, $b_j$, $c_j$ avec j = 0, 1, 2, 3, 4, sont des coefficients de mesure, qui sont donnés comme,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

où $\theta_j$, $\varphi_j$ sont respectivement le zénith et l'azimut de l'axe de mesure dans un système de coordonnée sphérique.

De cette manière le vecteur vent, à chaque instant échantillonné, pour l'ensemble des points de l'espace est composé des trois composantes qui vont permettre de déterminer l'image complète en trois dimensions. En outre le choix des coefficients de mesure permet de ne dépendre que des angles des faisceaux et ne sont pas fonction des distances de mesure ce qui facilite la programmation informatique de la fonction de cout *J*.

Le cœur de l'invention est défini par la fonction de cout *J* à un instant (t) quelconque s'écrit sous la forme suivante :

$$J(t) = (\omega(0) - \hat{\omega}(0))^T P_0^{-1} (\omega(0) - \hat{\omega}(0)) + \sum_{j=1}^{t} (\omega(j) - \omega(j-1))^T Q^{-1} (\omega(j) - \omega(j-1)) +$$

$$+ \sum_{j=1}^{t} \omega(j)^T C_s^T R_s^{-1} C_s \omega(j) + \sum_{j=1}^{t} (C_m \omega(j) - m_m)^T R_m^{-1} (C_m \omega(j) - m_m(j))$$

où $\omega$ est un vecteur ordonné composé de toutes les composantes de la vitesse des points de l'espace où le vent est estimé, $\hat{\omega}(0)$ est l'estimation de la vitesse du vent au temps 0, $P_0$, $Q$, $R_s$ et $R_m$ sont des matrices de pondération de dimension appropriée, et $C_s$, $C_m$ sont des matrices qui prennent en compte la vitesse du vent et les bruits de mesure.

En utilisant une telle fonction de coût, il est possible d'estimer la vitesse du vent en un point d'estimation. En outre une telle fonction permet d'avoir une interprétation claire des matrices de pondération $P_0$, $Q$, $R_s$ et $R_m$.

Selon un aspect de l'invention, les mesures de l'amplitude et de la direction du vent aux différents points de mesure s'effectuent à un taux d'échantillonnage d'au moins 0.25Hz. L'utilisation d'une telle plage de fréquences d'échantillonnage a pour effet d'obtenir plusieurs mesures en simultané sur un même axe de mesure tout en ayant des mesures qui soient fiables et précises.

Selon un aspect de l'invention, les mesures de l'amplitude et de la direction du vent aux différents points de mesure sont prises à au moins deux distances différentes le long de l'axe de mesure. Des mesures effectuées à au moins deux distances permettent de définir un volume tridimensionnel suffisant pour englober les pâles d'une éolienne comme cela sera décrit par la suite.

Selon un aspect de l'invention, les mesures de l'amplitude et de la direction du vent sont prises le long d'au moins trois axes de mesure. Le fait d'avoir au moins trois axes de mesures permet un maillage fin de l'espace en amont et permet également d'avoir une quantité de mesures suffisante pour l'étape d'estimation de la vitesse du vent.

Selon un aspect de l'invention, la cohérence spatiale de la vitesse du vent suivant des axes $x$, $y$ et $z$ d'un repère cartésien est estimée par une formule du type : où :

$$C_s \omega \approx 0$$

avec

$$C_s = \begin{bmatrix} C_l \\ C_t \\ C_v \end{bmatrix}$$

∘ $C_l$ caractérise la variation de la vitesse du vent pour un domaine d'estimation le long de l'axe longitudinal $x$ et

o $C_t$ caractérise la variation de la vitesse du vent pour un domaine d'estimation le long de l'axe latéral $y$ et

o $C_v$ caractérise la variation de la vitesse du vent pour un domaine d'estimation le long de l'axe vertical $z$ et

Une telle caractérisation a pour effet de rendre possible le codage informatique d'une telle fonction.

Selon un aspect de l'invention, la cohérence spatiale de la vitesse du vent suivant les axes $x$, $y$ et $z$ du repère cartésien est estimée avec les hypothèses suivantes :

∘ La variation de la vitesse du vent le long de l'axe longitudinal $x$ est faible et la dérivée partielle $dv_x/dx$ est relativement petite le long de l'axe longitunal,

∘ le vent change sans à-coup le long de l'axe latéral $y$ et la dérivée partielle $dv_x/dy$ est petite le long de l'axe latéral $y$,

∘ le vent change avec une loi de puissance suivant l'axe vertical $z$ qui est donnée par :

$$v_l = v_{lr} \left( \frac{z}{z_r} \right)^{\alpha}$$

où $\alpha$ est un exposant de la loi de puissance, $V_l$ est le vent longitudinal à une altitude $z$ au-dessus du sol, et $z_r$ une altitude de référence.

De telles hypothèses sont réalistes et permettent des estimations de vitesses du vent qui sont fiables et précises.

Selon un aspect de l'invention, la qualité des mesures effectuées par le LiDAR est représentée par un modèle de la forme :

$$C_m \omega = m_m + \epsilon_m$$

où $\epsilon_m$ décrit les bruits de mesure.

La formulation de ce type permet de prendre en compte les inexactitudes des mesures du LiDAR.

Selon un aspect de l'invention, l'estimation des amplitudes et des directions du champ de vent à un instant (t) sur l'ensemble des points d'estimation est donnée par la formule suivante :

$$\omega(t) = \omega(t-1) + K(y(t) - C\omega(t-1))$$

La formule précédente a pour intérêt de relier les estimations de la vitesse du vent dans le temps pour les points d'estimation.

L'invention concerne également un produit programme d'ordinateur qui comprend des instructions de code agencées pour mettre en œuvre les étapes du procédé d'acquisition et de modélisation précédemment décrit. Le programme est exécuté sur une unité de traitement du LiDAR.

L'invention concerne aussi un capteur LiDAR qui comprend en mémoire les instructions de code d'un produit programme d'ordinateur tel que décrit précédemment et qui est agencé pour exécuter un tel produit programme d'ordinateur.

De cette manière, un capteur LiDAR qui exécute un tel produit programme d'ordinateur renverra une information fiable d'un champ de vent incident en trois dimensions et en temps réel.

Un objet de l'invention concerne également une éolienne qui comprend un capteur LiDAR tel que décrit précédemment.

Selon un aspect de l'invention, le capteur LiDAR est disposé sur la nacelle de ladite éolienne.

Enfin l'invention concerne également un procédé de contrôle et/ou de surveillance d'une éolienne équipée d'un capteur LiDAR et un automate de pilotage, et le procédé comprend les étapes suivantes :

a) Une étape d'élaboration d'une stratégie de contrôle par anticipation de ladite éolienne en exploitant la reconstruction du champ de vent incident en trois dimensions et en temps réel,

b) Une étape de pilotage intégrant la stratégie de contrôle élaborée qui consiste à piloter l'angle des pâles ou l'orientation de la nacelle.

De cette manière la mise à disposition d'une information suffisamment robuste et précise de l'état de vent incident en approche du rotor, permet une nouvelle approche de contrôle, avec l'intégration d'un terme de pré-positionnement dynamique et préventif. En outre, la capacité de reconstruire en ligne, en temps réel, un champ de vent incident en approche du plan rotor ouvre de nombreuses perspectives d'exploitation : quantification du désalignement de l'éolienne, courbe de puissance, fonction de transfert de la nacelle, détection de rafales, surveillance et diagnostic du chargement et des risques de fatigue, optimisation de la maintenance préventive, analyse de la ressource, optimisation de la production. Ceci permet alors d'augmenter le rendement des éoliennes, de réduire les coûts de maintenance, d'augmenter la durée de vie des composants et de réduire les coûts d'investissement en optimisant le design.

## Présentation succincte des figures

D'autres caractéristiques et avantages du procédé selon l'invention, apparaîtront à la lecture de la description ci-après d'un exemple non limitatif de réalisation, en se référant aux figures annexées et décrites ci-après.

La figure 1 illustre une éolienne équipée d'un capteur LiDAR selon l'invention.
La figure 2 illustre les étapes du procédé d'acquisition et de modélisation par le capteur LiDAR selon l'invention.
La figure 3 est une vue de face du maillage de l'espace selon l'invention.
La figure 4 est une vue en perspective du maillage de l'espace selon l'invention.
La figure 5 illustre un champ de vent en 3D reconstruit à partir des mesures du LiDAR dans un cas particulier.
La figure 6 illustre les étapes du procédé de pilotage de l'éolienne selon l'invention.

**Description détaillée de l'invention**

Notations

Au cours de la description, les notations suivantes sont utilisées :

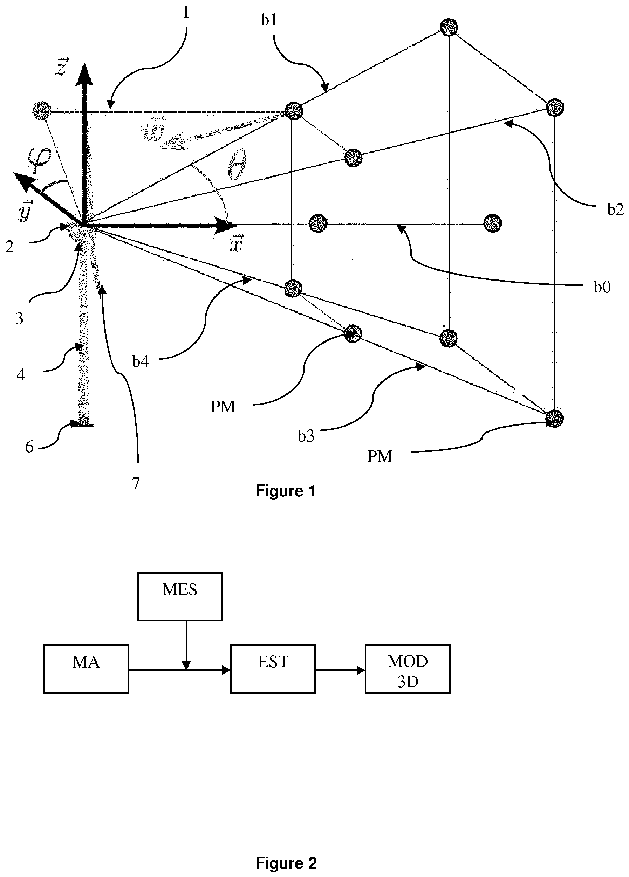

- *x, y, z* : directions du repère tridimensionnel, avec z l'axe vertical et x la direction principale du vent.
- $\theta$ et $\varphi$ : angles d'orientation dudit capteur LiDAR. Ces angles sont explicités sur la figure 1 : l'angle $\theta$ est l'angle fait par la projection de l'axe de mesure du LiDAR dans le plan (*y, z*), et $\varphi$ est l'angle fait par la projection de l'axe de mesure du LiDAR dans un plan constitué de l'axe *x* et de la projection de l'axe de mesure du LiDAR dans le plan (*y, z*).
- *m*(*t*) : mesure du capteur LiDAR à un point de mesure.
- $v_{j,x}(k)$, $v_{j,y}(k)$, $v_{j,z}(k)$ : projections de la vitesse du vent sur *x, y, z*.
- $\omega$ : vecteur ordonné composé de toutes les composantes de la vitesse du vent aux points de l'espace où le vent est estimé sur les axes *x, y* et *z* du repère tridimensionnel.
- $\hat{\omega}(t)$ : estimation de $\omega(t)$ à l'instant t.
- P(t): matrice auxiliaire variable dans le temps, qui peut être obtenue à l'instant t.
- $P_0$, $Q$, $R_s$ et $R_m$ sont des matrices de pondération de dimension appropriée.

Dans la suite de la description, le terme « LiDAR » est utilisé pour désigner un capteur « LiDAR ».

L'invention concerne en premier lieu un procédé d'acquisition et de modélisation par un capteur LiDAR d'un champ de vent incident dans le but d'estimer la vitesse et la direction du vent pour un champ de vent en approche et en amont du LiDAR et ceci de la manière la plus fiable possible. Cette estimation doit être faite en ligne, en temps réel, pour un champ de vent 3D échantillonné.

La figure 2 représente les différentes étapes du procédé d'acquisition et de modélisation selon l'invention :

1. Maillage (MA) de l'espace situé en amont dudit capteur LiDAR, le maillage comprend des points d'estimation (PE) et des points de mesure (PM).
2. Mesure (MES) de l'amplitude et de la direction du vent aux différents points de mesure (PM).
3. Estimation (EST) de l'amplitude et de la direction du vent à un instant (t) quelconque pour l'ensemble des points d'estimation (PE).
4. Reconstruction (MOD 3D) du champ de vent incident en trois dimensions (3D) et en temps réel sur l'ensemble des points discrétisés.

La figure 1 représente une éolienne 1 équipée d'un capteur LiDAR 2. Le capteur LiDAR 2 est utilisé pour mesurer la vitesse du vent à une distance donnée sur un point de mesure PM. La connaissance en avance de la mesure de vent permet à priori de donner beaucoup d'informations.

Il existe plusieurs types de capteur LiDAR, par exemple les capteurs LiDAR scannés, LiDAR continu ou LiDAR pulsés. Dans le cadre de l'invention, on utilise de préférence un LiDAR pulsé. Cependant les autres technologies de LiDAR peuvent être utilisées tout en restant dans le cadre de l'invention. Comme visible à la figure 1, qui est un exemple de réalisation, le LiDAR utilisé comporte 5 faisceaux ou axes de mesures (b0, b1, b2, b3, b4). De manière non limitative, le procédé d'acquisition et de modélisation fonctionne également avec un LiDAR comportant trois faisceaux ou plus. Le capteur LiDAR pulsé 5 faisceaux est monté sur une nacelle 3 d'éolienne 1.

Classiquement une éolienne 1 permet de transformer l'énergie cinétique du vent en énergie électrique ou mécanique. Pour la conversion du vent en énergie électrique, elle se compose des éléments suivants :

- un mât 4 permettant de placer un rotor (non représenté) à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol 6. Le mât 4 abrite généralement une partie des composants électriques et électroniques (modulateur, commande, multiplicateur, générateur, ...) ;

- une nacelle 3 montée au sommet du mât 4, abritant des composants mécaniques, pneumatiques, certains composants électriques et électroniques (non représentés), nécessaires au fonctionnement de la machine. La nacelle 3 peut tourner pour orienter la machine dans la bonne direction ;

- le rotor, fixé à la nacelle, comprenant plusieurs pales 7 (en général trois) et le nez de l'éolienne. Le rotor est entraîné par l'énergie du vent, il est relié par un arbre mécanique directement ou indirectement (via un système de boite de vitesse et d'arbre mécanique) à une machine électrique (générateur électrique...) (non représentés) qui convertit l'énergie recueillie en énergie électrique. Le rotor est potentiellement doté de systèmes de contrôle tels que des pâles à angle variable ou des freins aérodynamiques ;

- une transmission, composée de deux axes (arbre mécanique du rotor et arbre mécanique de la machine électrique) reliés par une transmission (boite de vitesse) (non représentés).

Dans la description exposée ci-après, le procédé d'acquisition et de modélisation décrit est théorique et fonctionne indépendamment de l'éolienne 1. Cependant les différents exemples et développements sont donnés dans le cas d'un LiDAR monté sur la nacelle 3 de l'éolienne 1 de manière à réaliser les différentes étapes du procédé d'acquisition et de modélisation représentées à la figure 2 à une certaine altitude par rapport au sol 6.

Dans cette partie, les différentes étapes du procédé d'acquisition et de modélisation selon l'invention sont décrits :

1. Maillage (MA) de l'espace situé en amont dudit capteur LiDAR

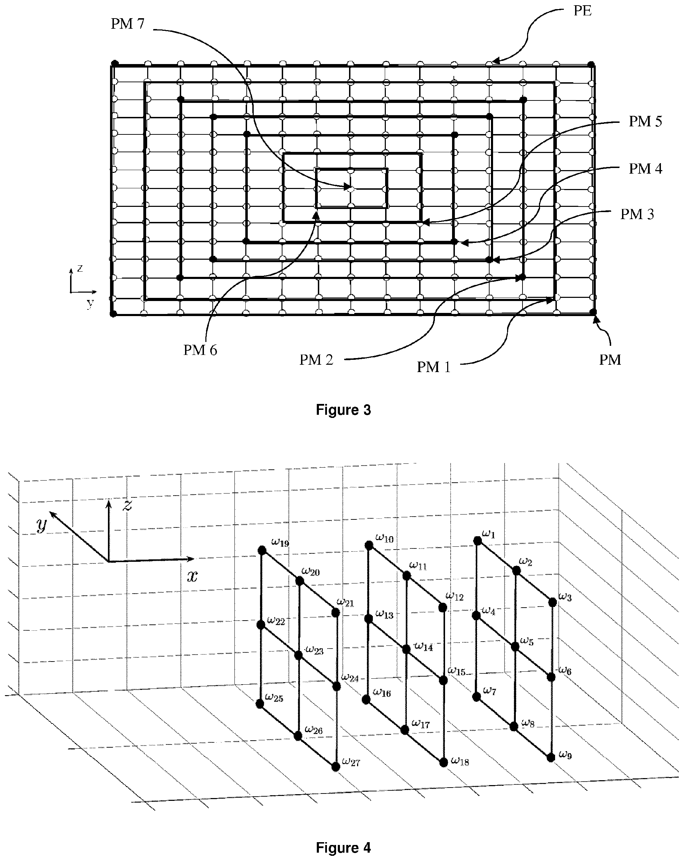

Dans cette première étape, l'espace en amont du capteur LiDAR est défini selon un maillage comme visible aux figures 1, 3 et 4. Dans cette étape un système de coordonnées dans lequel le Lidar effectue des mesures est défini. Le système de coordonnées défini est le trièdre direct illustré sur les figures 1 et 3. Les origines x - y de ce système sont au niveau du positionnement du LiDAR sur la nacelle 3, et l'origine z est au niveau du sol 6.

L'axe x pointe horizontalement dans la direction du vent, l'axe z pointe verticalement vers le haut et l'axe y est perpendiculaire pour former un repère tridimensionnel direct (conformément à la règle de la main droite).

Dans cette étape, le maillage de l'espace comprend un ensemble de points discrétisés placés en amont et qui définissent une grille tridimensionnelle. Pour chaque distance x fixée, le plan y - z est divisé en cellules sans chevauchement comme visible sur la figure 3. Le maillage comprend des points de mesure (PM) et des points d'estimations (PE) de la vitesse du vent.

En lien avec ce maillage de l'espace, on définit également des variables sous-jacentes, dites variables d'optimisation, nécessaires à l'étape d'estimation décrite ci-dessous. Afin de permettre une implémentation astucieuse et efficace de l'algorithme d'optimisation décrit plus bas, on rassemble toutes les variables d'optimisation dans un vecteur ordonné, noté $\omega$. L'ordre déterminé pour ces variables d'optimisation est un élément d'ingénierie crucial pour la faisabilité et la performance d'un algorithme de codage de ce procédé.

Un vecteur $\omega$ est défini pour chaque point de l'espace discrétisé et il est composé de toutes les composantes $v_x$ des points de l'espace (PE) où le vent est estimé, suivies respectivement par les composantes $v_y$ et $v_z$. L'estimation de la vitesse du vent en n points implique la construction d'un vecteur $\omega$ de taille 3n, avec $W_1$ à $W_n$ contenant tous les $v_x$, $W_{n+1}$ à

$W_{2n}$ contenant tous les $v_y$, et $W_{2n+1}$ à $W_{3n}$ contenant tous les $v_z$.

L'exemple suivant est donné pour les composantes $v_x$ de la vitesse du vent, étant entendu que la méthode est identique pour $v_y$ et $v_z$. Comme cela a été réalisé dans l'étape initiale, et comme visible sur la figure 3, l'espace est discrétisé en $x$, $y$ et z avec $n_x$ points en x, $n_y$ points en y et $n_z$ points en z.

Dans cette configuration on a :

$$n = n_x n_y n_z$$

On définit par $v_{i,j,k}$ la composante de la vitesse du vent $v_x$, dont la coordonnée est ($x_i$, $y_j$, $z_k$). L'indice $l$ de $W_l$, où se situe l'estimation correspondante, s'obtient ainsi :

$$l = (n_x - i)n_y n_z + (k - 1)n_y + j$$

Par exemple, si i = $n_x$, k = 1 et j = 1, alors

$$l = (n_x - i)n_y n_z + (k - 1)n_y + j = 1$$

Cela correspond au coin supérieur gauche du domaine d'estimation, à la distance la plus éloignée en amont du plan rotor, comme illustré sur la figure 4.

2. Mesure (MES) de l'amplitude et de la direction du vent à différents points de mesure

Dans un second temps, le capteur LiDAR réalise une mesure *m(t)* relative à la vitesse du vent en un point de mesure (PM) situé en amont de l'éolienne 1. Cette mesure *m(t)* correspond au signal reçu par le capteur en provenance du point de mesure (PM) en réponse au signal émis par le capteur LiDAR. En effet, par interférométrie et effet Doppler, une partie de signal Laser émis par le capteur LiDAR est réfléchi par les molécules d'air au point de mesure et également par les aérosols, (poussières et microparticules en suspension). Le point de mesure est défini par les caractéristiques du capteur LiDAR, notamment la distance focale, ainsi que par son orientation. Cette mesure, dépendante de la vitesse du vent, est un temps et dépend de l'orientation du capteur LiDAR.

Pour le cas étudié du LiDAR pulsé, les mesures sont obtenues successivement selon le maillage défini à l'étape précédente, en commençant par le faisceau longitudinal b0, puis le faisceau oblique b1, jusqu'au faisceau b4. Une caractéristique intéressante de ce système est qu'il permet de mesurer la projection de la vitesse du vent à plusieurs distances, simultanément, pour un faisceau donné. Il est ainsi possible d'obtenir, par exemple, 10 distances successives entre 50m et 400m, à un taux d'échantillonnage de 0.25Hz ou de 1 Hz. Il est bien sur possible de se limiter à deux mesures, qui sont suffisantes pour reconstruire un modèle en trois dimensions. A chaque temps d'échantillonnage, les seules mesures du faisceau courant sélectionné sont rafraîchies.

Dans un cas particulier, conforme à la figure 4, les mesures sont faites à sept distances et notamment à x= [50 80 120 160 200 240 280] m pour les cinq faisceaux. Ainsi pour chaque x fixé, le plan y - z est divisé en cellules comme suit :

- Les quatre premiers points (PM) correspondent aux coordonnées y - z des points de mesure pour les faisceaux 1, 2, 3, 4 de la distance x = 280m.
- Les quatre seconds points (PM1) correspondent aux coordonnées y - z des points de mesure pour les faisceaux 1, 2, 3, 4 de la distance x = 240m.
- Les quatre troisièmes points (PM2) correspondent aux coordonnées y - z des points de mesure pour les faisceaux 1, 2, 3, 4 de la distance x = 200m.
- Les quatre quatrièmes points (PM3) correspondent aux coordonnées y - z des points de mesure pour les faisceaux 1, 2, 3, 4 de la distance x = 160m.
- Les quatre cinquièmes points (PM4) correspondent aux coordonnées y - z des points de mesure pour les faisceaux 1, 2, 3, 4 de la distance x = 120m.
- Les quatre sixièmes points (PM5) correspondent aux coordonnées y - z des points de mesure pour les faisceaux 1, 2, 3, 4 de la distance x = 80m.
- Les quatre septièmes points (PM6) correspondent aux coordonnées y - z des points de mesure pour les faisceaux 1, 2, 3, 4 de la distance x = 50m.
- Le point central (PM7) correspond aux coordonnées y - z des points de mesure pour le faisceau 0 pour toutes les distances.

Les mesures *m(k)* de LiDAR pour les faisceaux j = 0, 1, 2, 3, 4 à la distance x mètres, et à l'instant k sont données par la formule *mj, x(k),* avec j = 0, 1, 2, 3, 4.

Par exemple, $m_{0,50}(1)$ est la mesure de LiDAR pour le faisceau j = 0 à la distance x = 50 mètres et à l'instant instantané k = 1. Dans le cadre de l'invention, la mesure LiDAR est alors donnée par une formule du type :

$$m_{j,x}(k) = a_j v_{j,x}(k) + b_j v_{j,y}(k) + c_j v_{j,z}(k)$$

où $v_{j,x}(\boldsymbol{k})$, $v_{j,y}(\boldsymbol{k})$, $v_{j,z}(\boldsymbol{k})$ sont des valeurs de la vitesse du vent projetées sur un repère donné au temps initial (k), et $a_j$, $b_j$, $c_j$, avec j = 0, 1, 2, 3, 4 sont des coefficients de mesure, qui sont donnés comme,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

où $\theta_j$, $\varphi j$, avec j = 0, 1, 2, 3, 4 sont respectivement le zénith et l'azimut de l'axe de mesure dans un système de coordonnée sphérique.

L'avantage de définir l'équation de mesure LiDAR dans le repère précédemment défini, avec le choix de discrétisation spatiale choisi, est que celle-ci peut être utilisée directement, puisque les coordonnées du point de mesure coïncident avec un point particulier de l'espace discrétisé.

3. Estimation (EST) de l'amplitude et de la direction du vent à un instant (t) quelconque sur l'ensemble des points discrétisés

Cette étape consiste à obtenir une valeur du vent sur les points d'estimation (PE) du maillage.

A cet effet l'estimation est effectuée au moyen de l'optimisation par une méthode de moindre carrés récursifs pondérés d'une fonction de coût qui utilise les données mesurées $m(k)$ du LiDAR, mais aussi des données de cohérence spatiale de la vitesse du vent, des données de variation temporelle de la vitesse du vent, ainsi que des données qualifiant la qualité des mesures $m(k)$ du LiDAR. C'est ce qui est explicité par la suite.

La prise en compte de la cohérence temporelle permet de quantifier la « ressemblance » de l'estimation du champ de vent à une date t, à l'estimation du champ de vent à une date antérieure (t-1, t-2, ...).

La mise en œuvre de la minimisation par moindre carrés récursifs pondérés de la fonction de coût, en intégrant la cohérence temporelle, correspond à l'implémentation d'un filtre de Kalman étendu.

$$\omega(t) = \omega(t-1) + K(y(t) - C\omega(t-1))$$

L'atout de cette approche est la capacité à considérer une mise à jour de l'estimation du champ de vent à une date t, même si les mesures acquises à la date t ne sont pas valides ou fiables. Ceci en s'appuyant sur l'estimation du champ de vent obtenue à une date antérieure ( t-1, t-2, etc...). Ainsi, par extension, la reconstruction du champ de vent est robuste à la non-disponibilité de données du dispositif d'acquisition, sur un laps de temps limité lié à la limite de cohérence temporelle de l'estimation. Une implémentation directe de cette solution, est la mise en place d'une zone mémoire tampon, communément nommée « buffer », et contenant les dernières mesures valides de chaque faisceau, à chaque distance du LiDAR. Ce buffer est alors la source de données d'entrée pour l'algorithme de reconstruction.

Par exemple, pour un dispositif pulsé 4-faisceaux, acquérant sur 10 distances, le buffer disposera de 4*10 places, où seront stockées les 40 dernières mesures radiales acquises valides. Ainsi, des indicateurs tels que la moyenne spatiale de la vitesse du vent à une distance donnée, seront stabilisés et fiabilisés par la disponibilité, à chaque date d'acquisition, de la totalité des mesures, qu'elles soient courantes, retardées ou estimées. En effet, il est avéré que, ne pas considérer la totalité des faisceaux pour établir un indicateur spatial du vent, aboutit à des valeurs erronées pour des moyennes spatiales, en particulier lorsque le vent est sujet à des cisaillements, ou lorsque le dispositif d'acquisition est désaligné par rapport à la direction prépondérante du vent.

Il est également nécessaire de joindre une datation ou un indicateur de l'obsolescence des données stockées, afin de pouvoir déterminer leur pertinence en tant que source d'information pour la mise à jour de l'estimation du champs de vent. Cette pertinence dépend de la cohérence temporelle du phénomène estimé, à savoir le champ de vent en propagation vers l'éolienne où est positionné le LiDAR. La cohérence temporelle du vent peut-être un paramètre de réglage, où issu d'un modèle de vent.

L'exploitation robuste de l'approche décrite dans le brevet nécessite la fourniture d'un indice ou d'un intervalle de confiance, accompagnant l'estimation du champs de vent et ses quantités descriptives associées, à chaque instant. Les quantités descriptives du champs de vent peuvent être par exemple : les cisaillements horizontaux et verticaux de l'amplitude et de la direction, la vitesse et direction moyenne à chaque distance de mesure, l'intensité de turbulence, ...

Cet intervalle de confiance est construit à partir d'une équation prenant en compte :

- Le nombre de mesures valides à la date d'acquisition courante
- La datation des dernières mesures valides, si les dernières acquisitions obtenues ne sont pas toutes fiables
- L'intervalle de confiance intrinsèque à l'algorithme de reconstruction. Cet intervalle de confiance dépend de la variance déduite du processus d'estimation. Dans le cas de l'implémentation par un filtre de Kalman, il pourra s'agir des valeurs de la matrice de covariance du processus modélisé.

Ces considérations permettent de synthétiser de manière robuste et fiable une incertitude à associer à la reconstruction du champ de vent, qui intègre la disponibilité et l'obsolescence des mesures avec l'indice de confiance intrinsèque de l'estimateur.

Cette incertitude peut être fournie avec la mesure, et assimilée à l'écart type global de l'estimation. Cette quantité est une information très pertinente pour des exploitations de la reconstruction dans un contexte de diagnostic temps réel, ou de contrôle assisté par LiDAR d'une éolienne.

## 3.1 Différences spatiales

Ces sous sections visent à définir les données de cohérence spatiale du vent dans le cadre de l'invention et plus particulièrement dans le cadre d'un LiDAR monté sur la nacelle 3 d'une éolienne 1.

Dans cette étape, on considère les composantes de la vitesse du vent sur les axes x, y et z du repère précédemment défini.

Lors de cette étape d'estimation, il est admis que la vitesse du vent change relativement peu dans l'espace, et que le vent a une forte cohérence spatiale dans un faible volume de l'espace. L'exposé suivant est fait ici pour les composantes $v_x$, c'est-à-dire pour les premières n variables de $\omega$ avec un domaine d'estimation représenté sur la figure 4 (L'approche est similaire pour les composantes $v_y$ et $v_z$) et en prenant $n_x = n_y = n_z = 3$.

## 3.1.1 Différence longitudinale

La différence longitudinale correspond au changement de $v_x$ le long de l'axe x et celui-ci change doucement selon l'invention. Dans ce cas la dérivée partielle $dv_x/dx$ est relativement petite. En d'autres termes,

$$\begin{cases} \omega_1 - \omega_{10} \approx 0 \\ \omega_2 - \omega_{11} \approx 0 \\ \vdots \\ \omega_{18} - \omega_{27} \approx 0 \end{cases}$$

L'équation précédente peut être écrite sous une forme vectorielle compacte comme :

$$C_{xl}\omega \approx 0$$

où

$$C_{xl} = \begin{bmatrix} +1 & 0 & \dots & 0 & -1 & 0 & \dots & 0 \\ 0 & +1 & \dots & 0 & 0 & -1 & \dots & 0 \\ \vdots & \vdots & \ddots & \vdots & \vdots & \vdots & \ddots & \vdots \\ 0 & 0 & \dots & +1 & 0 & 0 & \dots & -1 \end{bmatrix}$$

Il est à noter que chaque ligne de $C_{xl}$ contient un +1 et un -1.

De façon analogue, on peut calculer la variation de $v_y$ et $v_z$ le long de l'axe longitudinal comme:

$$\begin{cases} C_{yl}\omega \approx 0, \\ C_{zl}\omega \approx 0 \end{cases}$$

où $C_{yl}$, $C_{zl}$ sont, des matrices de coefficients, qui contiennent seulement un +1 et un -1 sur chaque ligne.

En définissant :

$$C_l = \begin{bmatrix} C_{xl} \\ C_{yl} \\ C_{zl} \end{bmatrix}$$

on obtient l'équation :

$$C_l\omega \approx 0$$

qui caractérise la variation de la vitesse du vent pour le domaine d'estimation le long de l'axe longitudinal.

### 3.1.2 Différence latérale

La différence latérale est le changement de $v_x$ le long de l'axe y. De façon analogue, puisque le vent change sans à-coup, la dérivée partielle $dv_x/dy$ est relativement petite. En d'autres termes,

$$\begin{cases} \omega_1 - \omega_2 \approx 0 \\ \omega_2 - \omega_3 \approx 0 \\ \vdots \\ \omega_{26} - \omega_{27} \approx 0 \end{cases}$$

On peut écrire l'équation précédente dans une forme vectorielle compacte comme

$$C_{xt}\omega \approx 0$$

où

$$C_{xt} = \begin{bmatrix} +1 & -1 & 0 & \dots & 0 & 0 & 0 & \dots & 0 & 0 \\ 0 & +1 & -1 & \dots & 0 & 0 & 0 & \dots & 0 & 0 \\ \vdots & \vdots & \vdots & \ddots & \vdots & \vdots & \vdots & \ddots & \vdots & \vdots \\ 0 & 0 & 0 & \dots & 0 & 0 & 0 & \dots & +1 & -1 \end{bmatrix}$$

Chaque ligne de $C_{xt}$ contient un +1 et un -1.
De façon analogue, la variation de $v_y$ et $v_z$ le long de l'axe latéral peut être calculée comme,

$$\begin{cases} C_{yt}\omega \approx 0, \\ C_{zt}\omega \approx 0 \end{cases}$$

où $C_{yt}$, $C_{zt}$ sont des matrices de coefficients qui ne contiennent qu'un +1 et un -1 pour chaque ligne.
En définissant :

$$C_t = \begin{bmatrix} C_{xt} \\ C_{yt} \\ C_{zt} \end{bmatrix}$$

Il est clair que l'équation :

$$C_t\omega \approx 0$$

caractérise la variation de la vitesse du vent pour le domaine d'estimation le long de l'axe latéral.

### 3.1.3 Différence verticale

Le profil vertical de la vitesse du vent est donné par une loi de puissance ce qui permet d'obtenir une description de la composante de vitesse du vent $v_x$ à différentes hauteurs qui est beaucoup plus précise.
Le profil vertical de la vitesse de vent décrit l'évolution de la vitesse de vent longitudinale en fonction de l'altitude relative au sol. La loi de puissance ("power law") du profil de la vitesse du vent est généralement utilisée pour estimer la vitesse du vent longitudinal $v_l$ à une altitude au-dessus du sol $z$, compte tenu de la vitesse longitudinale du vent $v_{lr}$ à une altitude de référence $z_r$, en utilisant l'équation,

$$v_l = v_{lr} \left( \frac{z}{z_r} \right)^\alpha$$

où alpha est l'exposant de loi de puissance, qui est généralement spécifié en fonction de la stabilité.

La valeur constante alpha = 1/7 est couramment utilisée, en cohérence avec une hypothèse de cisaillement du vent relativement faible. Cependant, il faut noter que considérer alpha constant, revient à faire abstraction de la rugosité de la surface du sol, des interactions du vent avec d'éventuels obstacles, et de la stabilité de l'atmosphère.

En utilisant cette loi de puissance on a ainsi une différence verticale du vent donnée par :

$$\begin{cases} \omega_1 - \left( \frac{z_1}{z_4} \right)^\alpha \omega_4 \approx 0 \\ \omega_2 - \left( \frac{z_2}{z_5} \right)^\alpha \omega_5 \approx 0 \\ \vdots \\ \omega_{24} - \left( \frac{z_{24}}{z_{27}} \right)^\alpha \omega_{27} \approx 0 \end{cases}$$

où $z_j$ est la hauteur de $\omega$, $\alpha$ est l'exposant de loi de puissance, qui est supposé être 1/7. On peut écrire l'équation précédente dans une forme vectorielle compacte comme :

$$C_{xv} \omega \approx 0$$

où

$$C_{xv} = \begin{bmatrix} +1 & 0 & 0 & -\left(\frac{z_1}{z_4}\right)^\alpha & 0 & 0 & \dots & 0 & 0 & 0 & 0 \\ 0 & +1 & 0 & 0 & -\left(\frac{z_2}{z_5}\right)^\alpha & 0 & \dots & 0 & 0 & 0 & 0 \\ \vdots & \vdots & \vdots & \vdots & \vdots & \vdots & \ddots & \vdots & \vdots & \vdots & \vdots \\ 0 & 0 & 0 & 0 & 0 & 0 & \dots & +1 & 0 & 0 & -\left(\frac{z_{24}}{z_{27}}\right)^\alpha \end{bmatrix}$$

De façon analogue, on peut quantifier la variation de $v_y$ et $v_z$ le long de l'axe vertical comme

$$\begin{cases} C_{yv} \omega \approx 0, \\ C_{zv} \omega \approx 0 \end{cases}$$

Cependant, comme la loi de puissance du profil du vent ne s'applique qu'à la vitesse longitudinale du vent, $C_{yv}$, $C_{zv}$ ne contiennent qu'un +1 et un -1 pour chaque ligne.

En définissant :

$$C_v = \begin{bmatrix} C_{xv} \\ C_{yv} \\ C_{zv} \end{bmatrix}$$

On obtient l'équation :

$$C_v \omega \approx 0$$

qui caractérise la variation de la vitesse du vent pour le domaine d'estimation le long de l'axe vertical.

Enfin, en utilisant :

$$C_l \omega \approx 0$$

et

$$C_t \omega \approx 0$$

on a :

$$\begin{cases} C_l \omega \approx 0, \\ C_t \omega \approx 0, \\ C_v \omega \approx 0 \end{cases}$$

où de manière équivalente,

$$C_s \omega \approx 0$$

qui est l'équation qui caractérise la variation de la vitesse totale du vent le long de l'axe x, y et z.

Avec :

$$C_s = \begin{bmatrix} C_l \\ C_t \\ C_v \end{bmatrix}$$

3.2 Mesures LiDAR

Pour les besoins du calcul, il est important de réécrire l'équation de mesure sous forme vectorielle de w. Dans l'exemple précédent d'un LiDAR à cinq faisceaux et pour sept mesures par faisceaux, on a j = 0, 1, 2, 3, 4, et x =[50, 80, 120, 160, 200, 240, 280],

$$\begin{cases} v_{j,x} = [0 \ \dots \ 0 \ 1 \ 0 \ \dots \ 0]\omega = C_{j,xx}\omega \\ v_{j,y} = [0 \ \dots \ 0 \ 1 \ 0 \ \dots \ 0]\omega = C_{j,xy}\omega \\ v_{j,z} = [0 \ \dots \ 0 \ 1 \ 0 \ \dots \ 0]\omega = C_{j,xz}\omega \end{cases}$$

En combinant avec :

$$m_{j,x}(k) = a_j v_{j,x}(k) + b_j v_{j,y}(k) + c_j v_{j,z}(k)$$

on obtient,

$$m_{j,x} = C_{j,x}\omega$$

où

$$C_{j,x} = \begin{bmatrix} a_j & b_j & c_j \end{bmatrix} \begin{bmatrix} C_{j,xx} \\ C_{j,xy} \\ C_{j,xz} \end{bmatrix}$$

que l'on peut réécrire sous une forme vectorielle compacte :

$$C_m \omega = m_m$$

où

$$m_m = \begin{bmatrix} m_{0,50} \\ m_{1,50} \\ \vdots \\ m_{4,280} \end{bmatrix}, \quad C_m = \begin{bmatrix} C_{0,50} \\ C_{1,50} \\ \vdots \\ C_{4,280} \end{bmatrix}$$

Pour prendre en compte les bruits de mesure, un modèle plus réaliste pour les mesures de Lidar peut être introduit comme suit,

$$C_m \omega = m_m + \epsilon_m$$

où $\varepsilon_m$ décrit les bruits de mesure.

3.3 La méthode des moindres carrés récursifs pondérés

Il est admis que la vitesse du vent change peu non seulement dans l'espace, mais aussi dans le temps. Dans ce qui suit, on fournit un moyen de prendre en compte cette information dans l'approche par optimisation. $\hat{\omega}(0)$ est l'estimation de la vitesse du vent au temps 0. A chaque instant, le problème d'optimisation est le suivant :

$$\min_{\omega(t)} J(t)$$

avec

$$J(t) = (\omega(0) - \hat{\omega}(0))^T P_0^{-1}(\omega(0) - \hat{\omega}(0)) + \sum_{j=1}^{t} (\omega(j) - \omega(j-1))^T Q^{-1} (\omega(j) - \omega(j-1)) + \\ + \sum_{j=1}^{t} \omega(j)^T C_s^T R_s^{-1} C_s \omega(j) + \sum_{j=1}^{t} (C_m \omega(j) - m_m)^T R_m^{-1} (C_m \omega(j) - m_m(j))$$

Il existe quatre termes dans la fonction de coût précédente.

- Le premier terme pénalise la connaissance de la vitesse initiale du vent $\omega(0)$.
- Le second terme pénalise la variation de la vitesse du vent dans le temps.
- Le troisième terme pénalise la variation de la vitesse du vent dans l'espace.
- Le quatrième terme pénalise la qualité de mesure Lidar.

En utilisant la formule précédente, on peut avoir une interprétation claire des matrices de pondération $P_0$, $Q$,

$R_s$ et $R_m$. Ainsi :

- Si la vitesse du vent $\omega(t)$ au temps t = 0 est bien connue, alors $\omega(0) = \hat{\omega}(0)$, alors $P_0$ est petit. Autrement $P_0$ est grand.
- S'il y a beaucoup de variations de la vitesse du vent dans le temps, alors $Q$ est grand. Autrement $Q$ est petit.
- Si la vitesse du vent change rapidement, alors $R_s$ est grand. Autrement $R_s$ est petit.
- S'il y a beaucoup de bruits dans les mesures Lidar, alors $R_m$ est grand. Sinon, $R_m$ est petit.

Dans le cas où l'on considère les trois cas limitatifs suivants :

- Aucune information sur la vitesse initiale du vent n'est disponible. Par conséquent $P_0$ est très grand. Le terme :

$$(\omega(0) - \hat{\omega}(0))^T P_0^{-1} (\omega(0) - \hat{\omega}(0))$$

peut ainsi être négligé dans la fonction de coût.

Il n'y a aucune relation entre la vitesse du vent à l'instant t et la vitesse du vent à l'instant t-1. Dans ce cas, on peut choisir $Q$ très grand. Le terme suivant peut être négligé :

$$\sum_{j=1}^{t} (\omega(j) - \omega(j-1))^T Q^{-1} (\omega(j) - \omega(j-1))$$

- La variation de la vitesse du vent dans l'espace est très faible. Dans ce cas, on peut prendre $R_s$ très petit. Le terme suivant est important dans la fonction de coût :

$$\sum_{j=1}^{t} \omega(j)^T C_s^T R_s^{-1} C_s \omega(j)$$

On définit :

$$C = \begin{bmatrix} C_s \\ C_m \end{bmatrix}, \quad R = \begin{bmatrix} R_s & 0 \\ 0 & R_m \end{bmatrix}$$

La méthode des moindres carrés récursifs pondérés utilisée pour résoudre le problème d'optimisation se présente de la façon suivante :

- On initialise les variables d'optimisation de la manière suivante :

$$\begin{cases} \omega(0) = \hat{\omega}(0), \\ P(0) = P_0 \end{cases}$$

- À chaque instant t :

    - on définit :

$$y(t) = \begin{bmatrix} 0 \\ y_m(t) \end{bmatrix}$$

où **0** est un vecteur nul de dimension appropriée.

▪ On calcule une matrice auxiliaire *K* telle que

$$K = (P(t-1) + Q)C(C^T(P(t-1) + Q)C + R)^{-1}$$

▪ On calcule la matrice *P(t)* telle que

$$P(t) = (I - KC)P(t-1)$$

où *I* est une matrice d'identité de dimension appropriée.

▪ La vitesse du vent à l'instant t est alors estimée ainsi :

$$\omega(t) = \omega(t-1) + K(y(t) - C\omega(t-1))$$

4. Reconstruction du champ de vent incident en trois dimensions (3D) et en temps réel

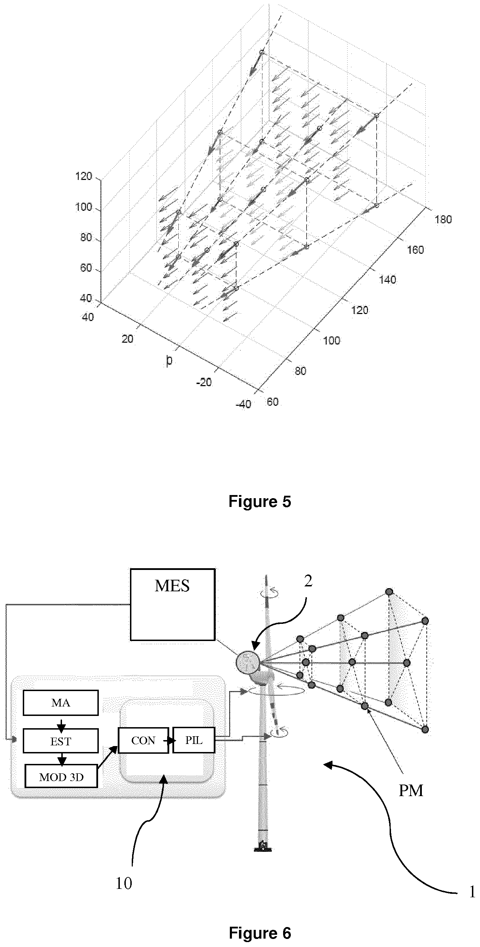

Dans cette étape, un processeur intégré au capteur LiDAR récupère l'ensemble des données d'amplitude et de direction du vent mesurées et estimées durant les étapes précédentes. La récupération de ces données se fait en temps réel pour chaque point de mesure (PM) et d'estimation (PE) définis précédemment. Ainsi le capteur LiDAR est en mesure de reconstruire l'ensemble du champ de vent incident sur le LiDAR comme visible à la figure 5.

Sur la même figure 5, un champ de vent reconstruit est représenté pour un temps à 68 secondes. En ordonnée, il est représenté l'altitude relative au sol (en m) et en abscisse il est représenté la distance à la nacelle (en m) et les positions relatives latérales au LiDAR (en m).

L'invention concerne en second lieu un procédé de contrôle et/ou de surveillance d'une éolienne équipée avec un capteur LiDAR tel que décrit précédemment et un automate de pilotage 10 afférent qui comprend les étapes suivantes :

i) Une étape d'élaboration d'une stratégie de contrôle (CON) par anticipation de ladite éolienne 1 en exploitant la reconstruction du champ de vent incident en trois dimensions et en temps réel obtenu par le procédé selon l'invention,

ii) Une étape de pilotage (PIL) intégrant la stratégie de contrôle élaborée qui consiste notamment à piloter l'angle des pâles 7 ou l'orientation de la nacelle 3.

La figure 6 représente le fonctionnement global d'une telle éolienne 1. L'éolienne 1 comprend à cet effet un capteur LiDAR 2 conforme à l'invention, et son unité de traitement, un dispositif informatique comprenant une solution logicielle de reconstruction 3D du champ de vent, un automate de pilotage intégrant la stratégie de contrôle et un dispositif de pilotage des pales et/ou de la nacelle de l'éolienne. En lien avec la figure 6, l'invention appliquée à une éolienne fonctionne de la manière suivante :

• Premièrement, le LiDAR effectue l'étape d'acquisition et de modélisation du champ de vent incident telle que décrite précédemment de manière à reconstruire un champ de vent incident 3D (étapes ME, MA, EST, MOD 3D de la figure 6),

• Deuxièmement, l'automate de pilotage 10 élabore la stratégie de contrôle (CON) et effectue le pilotage (PIL) des organes de l'éolienne 1 en tenant compte de la stratégie de contrôle élaborée.

Ce procédé selon l'invention permet d'analyser en temps réel le vent incident ou détecter des rafales, des courbes de puissance et des intensités de turbulence ce qui peut servir à réguler ou superviser l'éolienne de manière à obtenir un meilleur alignement de l'éolienne, ce qui conduit à une optimisation de la production et une minimisation des charges et de la fatigue.

**Revendications**

1.  Procédé d'acquisition et de modélisation par un capteur LiDAR d'un champ de vent incident dans un espace situé en amont dudit capteur LiDAR **caractérisé en ce que** le procédé comprend :

a) une étape de maillage (MA) de l'espace situé en amont dudit capteur LiDAR dans laquelle le maillage de l'espace est réalisé par un ensemble de points discrétisés positionnés selon une grille tridimensionnelle prédéfinie qui comprend un ensemble de mailles composées de points d'estimation et de points de mesure (PM),
b) une étape de mesure (MES) de l'amplitude et de la direction du vent aux différents points de mesure (PM) situés dans l'espace en amont et positionnés à au moins deux distances distinctes du capteur LiDAR, le long d'au moins trois axes de mesure,
c) une étape d'estimation (EST) de l'amplitude et de la direction du vent à un instant (t) quelconque sur l'ensemble des points d'estimation et l'estimation est effectuée au moyen de l'optimisation par une méthode de moindre carrés récursifs pondérés d'une fonction de coût J(t) qui utilise au moins les données des points de mesure (PM), des données de cohérence spatiale de la vitesse du vent, des données de cohérence temporelle de la vitesse du vent, ainsi que des données qualifiant la qualité des mesures effectuées sur les points de mesure, et ladite fonction de coût J(t) à un instant (t) quelconque s'écrit sous la forme suivante :

$$J(t) = (\omega(0) - \hat{\omega}(0))^T P_0^{-1} (\omega(0) - \hat{\omega}(0)) + \sum_{j=1}^{t} (\omega(j) - \omega(j-1))^T Q^{-1} (\omega(j) - \omega(j-1)) +$$
$$+ \sum_{j=1}^{t} \omega(j)^T C_s^T R_s^{-1} C_s \omega(j) + \sum_{j=1}^{t} (C_m \omega(j) - m_m)^T R_m^{-1} (C_m \omega(j) - m_m(j))$$

dans laquelle $\omega$ est un vecteur ordonné composé de toutes les composantes de la vitesse des points de l'espace où le vent est estimé, $\hat{\omega}(0)$ est l'estimation de la vitesse du vent au temps 0, $P_0$, $Q$, $R_s$ et $R_m$ sont des matrices de pondération de dimension appropriée, et $C_s$, $C_m$ sont des matrices qui prennent en compte la vitesse du vent et les bruits de mesure.
d) une étape de reconstruction (MOD 3D), en temps réel et dans un repère défini, du champ de vent incident en trois dimensions (3D) à partir des amplitudes et des directions du vent estimées et mesurées pour chaque point dudit maillage (MA).

2. Procédé selon la revendication 1, **caractérisé en ce que** la mesure m de l'amplitude et de la direction du vent en un point de mesure (PM) est donnée par une relation de la forme :

$$m_{j,x}(k) = a_j v_{j,x}(k) + b_j v_{j,y}(k) + c_j v_{j,z}(k)$$

où $v_{j,x}(k)$, $v_{j,y}(k)$, $v_{j,z}(k)$ sont des valeurs de la vitesse du vent projetées sur un repère donné au temps initial (k), et $a_j$, $b_j$, $c_j$ avec j = 0, 1, 2, 3, 4 sont des coefficients de mesure, qui sont donnés comme,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

où $\theta_j$, $\varphi_j$, j = 0, 1, 2, 3, 4 sont respectivement le zénith et l'azimut de l'axe de mesure dans un système de coordonnée sphérique.

3. Procédé selon l'une des revendications précédentes, **caractérisé en ce que** les mesures de l'amplitude et de la direction du vent aux différents points de mesure (PM) s'effectue à un taux d'échantillonnage d'au moins 0.25Hz.

4. Procédé selon l'une des revendications précédentes, **caractérisé en ce que** les mesures de l'amplitude et de la direction du vent aux différents points de mesure (PM) sont prises à au moins deux distances différentes le long de l'axe de mesure.

5. Procédé selon l'une des revendications précédentes, **caractérisé en ce que** les mesures de l'amplitude et de la direction du vent sont prises le long d'au moins trois axes de mesure.

6. Procédé selon l'une des revendications précédentes, **caractérisé en ce que** la cohérence spatiale de la vitesse du vent suivant des axes x, y et z d'un repère cartésien est estimée par une formule du type:

$$C_s \omega \approx 0$$

avec

$$C_s = \begin{bmatrix} C_l \\ C_t \\ C_v \end{bmatrix}$$

où :

◦ $C_l$ caractérise la variation de la vitesse du vent pour un domaine d'estimation le long de l'axe longitudinal x et
◦ $C_t$ caractérise la variation de la vitesse du vent pour un domaine d'estimation le long de l'axe latéral y et
◦ $C_v$ caractérise la variation de la vitesse du vent pour un domaine d'estimation le long de l'axe vertical z et
◦ le vecteur $\omega$ est un vecteur ordonné composé de toutes les composantes de la vitesse du vent aux points de l'espace où le vent est estimé.

7. Procédé selon la revendication précédente, **caractérisé en ce que** la cohérence spatiale de la vitesse du vent suivant les axes x, y et z du repère cartésien est estimée avec les hypothèses suivantes :

o La variation de la vitesse du vent le long de l'axe longitudinal x est faible et la dérivée partielle $dv_x/dx$ est relativement petite le long de l'axe longitunal,
o le vent change sans à-coup le long de l'axe latéral y et la dérivée partielle $dv_x/dy$ est petite le long de l'axe latéral y,
o le vent change avec une loi de puissance suivant l'axe vertical z qui est donnée par :

$$v_l = v_{lr} \left( \frac{z}{z_r} \right)^{\alpha}$$

où alpha est un exposant de la loi de puissance, $v_l$ est le vent longitudinal à une altitude z au-dessus du sol, et $z_r$ une altitude de référence.

8. Procédé selon l'une des revendications précédentes, **caractérisé en ce que** la qualité des mesures effectuées par le capteur LiDAR est représentée par un modèle de la forme :

$$C_m \omega = m_m + \epsilon_m$$

Où $\epsilon_m$ décrit les bruits de mesure.

9. Procédé selon l'une des revendications précédentes, **caractérisé en ce que** l'estimation des amplitudes et des directions du champ de vent à un instant (t) sur l'ensemble des points d'estimation est donnée par la formule suivante :

$$\omega(t) = \omega(t-1) + K(y(t) - C\omega(t-1))$$

ou $K$ représente une matrice auxiliaire et $C$ est une matrice définie par :

$$C = \begin{bmatrix} C_s \\ C_m \end{bmatrix}$$

**10.** Produit programme d'ordinateur **caractérisé en ce qu'**il comprend des instructions de code agencées pour mettre en œuvre les étapes d'un procédé d'acquisition et de modélisation par un capteur LiDAR d'un champ de vent incident selon l'une des revendications précédentes, lorsque ledit programme est exécuté sur une unité de traitement dudit capteur LiDAR.

**11.** Capteur LiDAR **caractérisé en ce qu'**il comprend en mémoire les instructions de code d'un produit programme d'ordinateur selon la revendication précédente et agencé pour exécuter un tel produit programme d'ordinateur.

**12.** Éolienne 1 **caractérisée en ce que** ladite éolienne 1 comprend un capteur LiDAR 2 selon la revendication précédente.

**13.** Éolienne 1 selon la revendication précédente **caractérisé en ce que** ledit capteur LiDAR est disposé sur la nacelle de ladite éolienne.

**14.** Procédé de contrôle et/ou de surveillance d'une éolienne 1 équipée avec un capteur LiDAR 2 et un automate de pilotage, **caractérisé en ce qu'**on réalise les étapes suivantes

i) Une étape d'élaboration d'une stratégie de contrôle (CON) par anticipation de ladite éolienne en exploitant la reconstruction du champ de vent incident en trois dimensions et en temps réel obtenu par le procédé d'acquisition et de modélisation par un capteur LiDAR d'un champ de vent incident selon l'une des revendications 1 à 10,
ii) Une étape de pilotage (PIL) intégrant la stratégie de contrôle élaborée qui consiste à piloter l'angle de pâles 7 ou l'orientation d'une nacelle 3.

**Patentansprüche**

**1.** Verfahren zur Erfassung und Modellierung eines anströmenden Windfelds durch einen LiDAR-Sensor in einem stromaufwärts vor dem LiDAR-Sensor befindlichen Raum, **dadurch gekennzeichnet, dass** das Verfahren enthält:

a) einen Schritt des Vermaschens (MA) des stromaufwärts vor dem LiDAR-Sensor befindlichen Raums, bei dem die Vermaschung des Raums durch eine Gruppe von diskretisierten Punkten durchgeführt wird, die gemäß einem vordefinierten dreidimensionalen Raster positioniert sind, das eine Gruppe von Maschen enthält, die aus Schätzpunkten und Messpunkten (PM) zusammengesetzt sind,
b) einen Schritt des Messens (MES) der Amplitude und der Richtung des Winds an den verschiedenen Messpunkten (PM), die sich im Raum stromaufwärts befinden und in mindestens zwei unterschiedlichen Abständen vom LiDAR-Sensor entlang von mindestens drei Messachsen positioniert sind,
c) einen Schritt des Schätzens (EST) der Amplitude und der Richtung des Winds zu einem beliebigen Zeitpunkt (t) an der Gruppe der Schätzpunkte, und die Schätzung wird mittels der Optimierung durch eine Methode der gewichteten rekursiven kleinsten Quadrate einer Kostenfunktion J(t) ausgeführt, die mindestens die Daten der Messpunkte (PM), räumliche Kohärenzdaten der Geschwindigkeit des Winds, zeitliche Kohärenzdaten der Geschwindigkeit des Winds sowie Daten verwendet, die die Qualität der an den Messpunkten ausgeführten Messungen qualifizieren, und die Kostenfunktion J(t) zu einem beliebigen Zeitpunkt (t) schreibt sich folgendermaßen:

$$J(t) = \left(\omega(0) - \widehat{\omega}(0)\right)^T P_0^{-1}\left(\omega(0) - \widehat{\omega}(0)\right)$$
$$+ \sum_{j=1}^{t}\left(\omega(j) - \omega(j-1)\right)^T Q^{-1}\left(\omega(j) - \omega(j-1)\right)$$
$$+ \sum_{j=1}^{t}\omega(j)^T C_s^T R_s^{-1} C_s \omega(j)$$
$$+ \sum_{j=1}^{t}\left(C_m\omega(j) - m_m\right)^T R_m^{-1}\left(C_m\omega(j) - m_m(j)\right)$$

wobei $\omega$ ein geordneter Vektor ist, der aus allen Komponenten der Geschwindigkeit der Punkte des Raums zusammengesetzt ist, wo der Wind geschätzt wird, $\hat{\omega}(0)$ die Schätzung der Geschwindigkeit des Winds zur Zeit 0 ist, $P_0$, Q, $R_s$ und $R_m$ Gewichtungsmatrizen geeigneter Abmessung sind, und $C_s$, $C_m$ Matrizen sind, die die Geschwindigkeit des Winds und das Messrauschen berücksichtigen,

d) einen Schritt der Rekonstruktion (MOD 3D), in Echtzeit und in einem definierten Koordinatensystem, des anströmenden Windfelds in drei Dimensionen (3D) ausgehend von den geschätzten und gemessenen Amplituden und Richtungen des Winds für jeden Punkt der Vermaschung (MA).

2. Verfahren nach Anspruch 1, **dadurch gekennzeichnet, dass** die Messung m der Amplitude und der Richtung des Winds an einem Messpunkt (PM) durch eine Beziehung folgender Form geliefert wird:

$$m_{j,x}(k) = a_j v_{j,x}(k) + b_j v_{j,y}(k) + c_j v_{j,z}(k)$$

wobei $v_{j,x}(k)$, $v_{j,y}(k)$, $v_{j,z}(k)$ Werte der Geschwindigkeit des Winds projiziert auf ein gegebenes Koordinatensystem zur Ausgangszeit (k) sind, und $\alpha_j$, bj, $c_j$ mit j = 0, 1, 2, 3, 4 Messkoeffizienten sind, die geliefert werden als

$$\begin{cases} a_j = cos(\theta_j), \\ b_j = sin(\theta_j)cos(\varphi_j), \\ c_j = sin(\theta_j)sin(\varphi_j) \end{cases}$$

wobei $\theta_j$, $\varphi_j$, j = 0, 1, 2, 3, 4 jeweils der Zenit und der Azimut der Messachse in einem Kugelkoordinatensystem sind.

3. Verfahren nach einem der vorhergehenden Ansprüche, **dadurch gekennzeichnet, dass** die Messungen der Amplitude und der Richtung des Winds an den verschiedenen Messpunkten (PM) mit einer Abtastrate von mindestens 0.25Hz erfolgen.

4. Verfahren nach einem der vorhergehenden Ansprüche, **dadurch gekennzeichnet, dass** die Messungen der Amplitude und der Richtung des Winds an den verschiedenen Messpunkten (PM) in mindestens zwei verschiedenen Abständen entlang der Messachse vorgenommen werden.

5. Verfahren nach einem der vorhergehenden Ansprüche, **dadurch gekennzeichnet, dass** die Messungen der Amplitude und der Richtung des Winds entlang von mindestens drei Messachsen vorgenommen werden.

6. Verfahren nach einem der vorhergehenden Ansprüche, **dadurch gekennzeichnet, dass** die räumliche Kohärenz der Geschwindigkeit des Winds gemäß den Achsen x, y und z eines kartesischen Koordinatensystems durch eine Formel des folgenden Typs geschätzt wird:

$$C_s \omega \approx 0$$

mit

$$C_s \begin{bmatrix} C_l \\ C_t \\ C_v \end{bmatrix}$$

wobei:

    o $C_l$ die Änderung der Geschwindigkeit des Winds für einen Schätzbereich entlang der Längsachse x charakterisiert und

    o Ct die Änderung der Geschwindigkeit des Winds für einen Schätzbereich entlang der Querachse y charakterisiert und

    ∘ $C_v$ die Änderung der Geschwindigkeit des Winds für einen Schätzbereich entlang der senkrechten Achse z charakterisiert und

o der Vektor ω ein geordneter Vektor ist, bestehend aus allen Komponenten der Geschwindigkeit des Winds an den Punkten des Raums, wo der Wind geschätzt wird.

**7.** Verfahren nach dem vorhergehenden Anspruch, **dadurch gekennzeichnet, dass** die räumliche Kohärenz der Geschwindigkeit des Winds gemäß den Achsen x, y und z des kartesischen Koordinatensystems mit den folgenden Hypothesen geschätzt wird:

o die Änderung der Geschwindigkeit des Winds entlang der Längsachse x ist schwach, und die teilweise Ableitung $dv_x/dx$ entlang der Längsachse ist relativ klein,
o der Wind ändert sich ohne Stoß entlang der Querachse y und die teilweise Ableitung $dv_x/dy$ entlang der Querachse y ist klein,
o der Wind ändert sich mit einem Leistungsgesetz entlang der senkrechten Achse z, das geliefert wird durch:

$$v_l = v_{lr} \left(\frac{z}{z_r}\right)^a$$

wobei Alpha ein Exponent des Leistungsgesetzes, $v_l$ der Längswind in einer Höhe z über dem Boden und $z_r$ eine Bezugshöhe ist.

**8.** Verfahren nach einem der vorhergehenden Ansprüche, **dadurch gekennzeichnet, dass** die Qualität der vom LiDAR-Sensor ausgeführten Messungen durch ein Modell folgender Form dargestellt wird:

$$C_m \omega = m_m + \epsilon_m$$

wobei $\epsilon_m$ das Messrauschen beschreibt.

**9.** Verfahren nach einem der vorhergehenden Ansprüche, **dadurch gekennzeichnet, dass** die Schätzung der Amplituden und der Richtungen des Windfelds zu einem Zeitpunkt (t) an der Gruppe der Schätzpunkte durch die folgende Formel geliefert wird:

$$\omega(t) = \omega(t-1) + K\big(y(t) - C_\omega(t-1)\big)$$

wobei K eine Hilfsmatrix darstellt und C eine durch:

$$C = \begin{bmatrix} C_s \\ C_m \end{bmatrix}$$

definierte Matrix ist.

**10.** Computerprogrammprodukt, **dadurch gekennzeichnet, dass** es Codeanweisungen enthält, die eingerichtet sind, die Schritte eines Verfahrens zur Erfassung und Modellierung eines anströmenden Windfelds durch einen LiDAR-Sensor nach einem der vorhergehenden Ansprüche durchzuführen, wenn das Programm auf einer Verarbeitungseinheit des LiDAR-Sensors ausgeführt wird.

**11.** LiDAR-Sensor, **dadurch gekennzeichnet, dass** er die Codeanweisungen eines Computerprogrammprodukts nach dem vorhergehenden Anspruch im Speicher enthält und eingerichtet ist, ein solches Computerprogrammprodukt auszuführen.

**12.** Windkraftanlage 1, **dadurch gekennzeichnet, dass** die Windkraftanlage 1 einen LiDAR-Sensor 2 nach dem vorhergehenden Anspruch enthält.

**13.** Windkraftanlage 1 nach dem vorhergehenden Anspruch, **dadurch gekennzeichnet, dass** der LiDAR-Sensor auf der Gondel der Windkraftanlage angeordnet ist.

**14.** Verfahren zur Kontrolle und/oder Überwachung einer mit einem LiDAR-Sensor 2 und einem Steuerautomaten ausgestatteten Windkraftanlage 1, **dadurch gekennzeichnet, dass** die folgenden Schritte durchgeführt werden:

i) ein Schritt der Erarbeitung einer Kontrollstrategie (CON) durch Antizipation der Windkraftanlage durch Auswerten der Rekonstruktion des anströmenden Windfelds in drei Dimensionen und in Echtzeit, das durch das Erfassungs- und Modellierungsverfahren eines anströmenden Windfelds durch einen LiDAR-Sensor nach einem der Ansprüche 1 bis 10 erhalten wird,
ii) ein Schritt der Steuerung (PIL), der die erarbeitete Kontrollstrategie umfasst, der darin besteht, den Winkel von Flügeln 7 oder die Ausrichtung einer Gondel 3 zu steuern.

**Claims**

**1.** Method for acquiring and modelling, by a LiDAR sensor, an incident wind field in a space situated upstream of said LiDAR sensor, **characterized in that** the method comprises:

a) a step of meshing (MA) of the space situated upstream of said LiDAR sensor in which the mesh of the space is produced by a set of discretized points positioned according to a predefined three-dimensional grid which comprises a set of meshes composed of estimation points and measurement points (PM),
b) a step of measurement (MES) of the amplitude and of the direction of the wind at the different measurement points (PM) situated in the space upstream and positioned at at least two distinct distances from the LiDAR sensor, along at least three measurement axes,
c) a step of estimation (EST) of the amplitude and of the direction of the wind at any instant (t) over all of the estimation points and the estimation is made by means of optimization by a recursive least squares method weighted by a cost function $J(t)$ which uses at least the data from the measurement points (PM), spatial wind speed consistency data, temporal wind speed consistency data, and data qualifying the quality of the measurements performed on the measurement points, and said cost function $J(t)$ at any instant (t) expressed in the following form:

$$J(t) = (\omega(0) - \hat{\omega}(0))^T P_0^{-1}(\omega(0) - \hat{\omega}(0)) + \sum_{j=1}^{t} (\omega(j) - \omega(j-1))^T Q^{-1} (\omega(j) - \omega(j-1)) +$$
$$+ \sum_{j=1}^{t} \omega(j)^T C_s^T R_s^{-1} C_s \omega(j) + \sum_{j=1}^{t} (C_m \omega(j) - m_m)^T R_m^{-1} (C_m \omega(j) - m_m(j))$$

in which $\omega$ is an ordered vector composed of all the components of the speed of the points of the space where the wind is estimated, $\hat{\omega}(0)$ is the estimation of the wind speed at the time 0, $P_0$, $Q$, $R_s$ and $R_m$ are weighting matrices of appropriate dimension, and $C_s$, $C_m$ are matrices which take into account the wind speed and the measurement noises,
d) a step of reconstruction (MOD 3D), in real time and within a defined reference frame, of the incident wind field in three dimensions (3D) from the amplitudes and the directions of wind estimated and measured for each point of said mesh (MA).

**2.** Method according to Claim 1, **characterized in that** the measurement $m$ of the amplitude and of the direction of the wind at a measurement point (PM) is given by a relationship of the form:

$$m_{j,x}(k) = a_j v_{j,x}(k) + b_j v_{j,y}(k) + c_j v_{j,z}(k)$$

in which $v_{j,x}(k)$, $v_{j,y}(k)$, $v_{j,z}(k)$ are values of the wind speed projected on a given reference frame at the initial time (k), and $a_j$, $b_j$, $c_j$ with j = 0, 1, 2, 3, 4 are measurement coefficients, which are given as,

$$\begin{cases} a_j = \cos(\theta_j), \\ b_j = \sin(\theta_j)\cos(\varphi_j), \\ c_j = \sin(\theta_j)\sin(\varphi_j) \end{cases}$$

in which $\theta_j$, $\varphi_j$, j = 0, 1, 2, 3, 4 are, respectively, the zenith and the azimuth of the measurement axis in a spherical coordinate system.

3. Method according to one of the preceding claims, **characterized in that** the measurements of the amplitude and of the direction of the wind at the different measurement points (PM) is performed with a sampling rate of at least 0.25 Hz.

4. Method according to one of the preceding claims, **characterized in that** the measurements of the amplitude and of the direction of the wind at the different measurement points (PM) are taken at at least two different distances along the measurement axis.

5. Method according to one of the preceding claims, **characterized in that** the measurements of the amplitude and of the direction of the wind are taken along at least three measurement axes.

6. Method according to one of the preceding claims, **characterized in that** the spatial consistency of the wind speed on the axes X, y and z of a Cartesian reference frame is estimated by a formula of the type:

$$C_s \omega \approx 0$$

with

$$C_s = \begin{bmatrix} C_l \\ C_t \\ C_v \end{bmatrix}$$

in which:

> o $C_l$ characterizes the variation of the wind speed for an estimation domain along the longitudinal axis x and
> o Ct characterizes the variation of the wind speed for an estimation domain along the lateral axis y and
> o $C_v$ characterizes the variation of the wind speed for an estimation domain along the vertical axis z and
> o the vector $\omega$ is an ordered vector composed of all the components of the wind speed at the points of the space where the wind is estimated.

7. Method according to the preceding claim, **characterized in that** the spatial consistency of the wind speed on the axes x, y and z of the Cartesian reference frame is estimated with the following hypotheses:

> o the variation of the wind speed along the longitudinal axis x is low and the partial derivative $dv_x/dx$ is relatively small along the longitudinal axis,
> o the wind changes smoothly along the lateral axis y and the partial derivative $dv_x/dy$ is small along the lateral axis y,
> o the wind changes with a power law on the vertical axis z which is given by:

$$v_l = v_{lr} \left(\frac{z}{z_r}\right)^\alpha$$

in which alpha is an exponent of the power law, $v_l$ is the longitudinal wind at an altitude z above the ground, and $z_r$ a reference altitude.

8. Method according to one of the preceding claims, **characterized in that** the quality of the measurements performed by the LiDAR sensor is represented by a model of the form:

$$C_m \omega = m_m + \epsilon_m$$

in which $\epsilon_m$ describes the measurement noises.

9. Method according to one of the preceding claims, **characterized in that** the estimation of the amplitudes and of the directions of the wind field at an instant (t) over all of the estimation points is given by the following formula:

$$\omega(t) = \omega(t-1) + K(y(t) - C\omega(t-1))$$

in which *K* represents an auxiliary matrix and C is a matrix defined by:

$$C = \begin{bmatrix} C_s \\ C_m \end{bmatrix}$$

10. Computer program product, **characterized in that** it comprises code instructions organized to implement the steps of a method for acquiring and modelling, by a LiDAR sensor, an incident wind field according to one of the preceding claims, when said program is run on a processing unit of said LiDAR sensor.

11. LiDAR sensor, **characterized in that** it comprises, in memory, the code instructions of a computer program product according to the preceding claim and organized to run such a computer program product.

12. Wind turbine 1, **characterized in that** said wind turbine 1 comprises a LiDAR sensor 2 according to the preceding claim.

13. Wind turbine 1 according to the preceding claim, **characterized in that** said LiDAR sensor is disposed on the nacelle of said wind turbine.

14. Method for controlling and/or monitoring a wind turbine 1 equipped with a LiDAR sensor 2 and a driving logic controller, **characterized in that** the following steps are carried out:

i) a step of generation of strategy of feedforward control (CON) of said wind turbine by using the reconstruction of the incident wind field in three dimensions and in real time obtained by the method of acquiring and of modelling, by a LiDAR sensor, an incident wind field according to one of Claims 1 to 10,
ii) a driving step (PIL) incorporating the control strategy generated which consists in driving the pitch of the blades 7 or the orientation of a nacelle 3.

**Figure 1**

**Figure 2**

Figure 3

Figure 4

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A tutorial on the dynamics and control of wind turbines and wind farms. 2009 American Control Conference. IEEE, 2009, 2076-2089
- **P TOWERS ; B LI JONES.** Real-time wind field reconstruction from LiDAR measurements using a dynamic wind model and state estimation. *Wind Energy,* 2016, vol. 19.1, 133-150
- **F. GUILLEMIN et al.** Nacelle LiDAR online wind field reconstruction applied to feedforward pitch control. *JOURNAL OF PHYSICS: CONFERENCE SERIES,* 01 Septembre 2016, vol. 753, 052019